# FASCICULE DE BREVET EUROPEEN

(11) **EP 1 910 158 B1**
(45) Date de publication et mention de la délivrance du brevet: **07.04.2010**
(21) Numéro de dépôt: 06779050.1
(22) Date de dépôt: 12.07.2006
(51) Int. Cl.: B62D 65/02

(54) **PROCEDE DE FABRICATION D'UNE CAISSE DE VEHICULE ET DISPOSITIF DE MISE EN UVRE DUDIT PROCEDE**
VERFAHREN ZUR HERSTELLUNG DER AUSSENHAUT EINES FAHRZEUGS UND VORRICHTUNG ZUR AUSFÜHRUNG DIESES VERFAHRENS
METHOD FOR MAKING A VEHICLE BODY SHELL AND DEVICE FOR IMPLEMENTING SAID METHOD

(30) Priorité: 20.07.2005 FR 0552248
(43) Date de publication de la demande: 16.04.2008
(73) Titulaire: PEUGEOT CITROËN AUTOMOBILES S.A., 78140 Vélizy Villacoublay (FR)
(72) Inventeur: GUERRIER, Michel, F-35131 Pont Pean (FR)
(86) Numéro de dépôt international: PCT/FR2006/050714
(87) Numéro de publication internationale: WO 2007/010159

(56) Documents cités:
- EP-A- 0 446 518
- EP-A- 1 241 085
- DE-A1- 3 150 476
- FR-A- 2 714 652
- FR-A- 2 841 869
- GB-A- 2 192 594
- US-A- 4 776 085

## Description

La présente invention se rapporte à un procédé de fabrication d'une caisse de véhicule et, à un dispositif de mise en oeuvre destiné notamment à stabiliser une caisse de véhicule lorsqu'elle se trouve à une étape prédéterminée d'une chaîne de production.

Une des étapes d'une chaîne de fabrication d'un véhicule consiste en l'application de produit étanchéifiant, par exemple du mastic, sur les surfaces inférieures de la caisse au moins partiellement fabriquée du véhicule, par exemple au niveau du bas de caisse ou dans la cuvette de la roue de secours. Typiquement, la caisse de véhicule est transportée par une balancelle vers la zone d'étanchéification. Puis, la balancelle est arrêtée afin qu'un appareil robotique puisse appliquer du produit étanchéifiant sur les surfaces inférieures de la caisse du véhicule. Afin que le robot puisse bien appliquer le produit étanchéifiant, il est nécessaire de déterminer avec précision la position de la caisse. Cette opération se fait au moyen de cameras. Cependant, même quand la balancelle est à l'arrêt, la caisse de véhicule continue à se déplacer légèrement pendant un certain temps, que ce soit longitudinalement dans le sens de l'axe de déplacement de la balancelle, latéralement par rapport à cet axe, ou une combinaison des deux mouvements. Typiquement, la caisse peut rester en mouvement jusqu'à 25 secondes après l'arrêt de la balancelle. Tant que la caisse n'est pas complètement immobilisée, l'étape de vision avec les cameras ne peut pas avoir lieu, prolongeant inutilement la fabrication du véhicule.

Il est connu de GB2192 594 une installation comprenant une balancelle de transport d'une caisse d'un véhicule, la balancelle étant apte à être immobilisée par un moyen d'indexage et de crochetage de doigts d'indexage de la balancelle sur le véhicule et par un moyen de verrouillage d'un autre ensemble de doigts faisant saillie hors de la balancelle. Une telle installation la stabilisation forcée de la caisse est contraignante tant en ce qui concerne le temps nécessaire au déploiement des différents moyens d'indexage, de crochetage et de verrouillage, qu'en ce qui concerne l'assemblage hyperstatique ainsi réalisé.

Ainsi, la demanderesse s'est fixé comme objectif de fournir un procédé de fabrication qui permet de réduire le temps de fabrication du véhicule sur une chaîne de production, ainsi qu'un dispositif de mise en oeuvre du procédé qui est de construction simple, qui est fiable.

Pour répondre à cet objectif, la présente invention a trait à un procédé de fabrication d'un véhicule comprenant une étape de suspension du véhicule, à une balancelle au moyen de bras (1 , 20) d'ensembles de crochet avant et arrière, dans laquelle chaque bras vient prendre appui sur la surface inférieure du pavillon du véhicule, la balancelle étant apte à se déplacer le long d'une chaîne de production où est opérée une succession d'étapes de réalisation des opérations de fabrication spécifiques, telle qu'une application d'un produit étanchéifiant, pour lequel au moins l'une desdites étapes comprend la succession des actions suivantes :
- arrêt de la balancelle lorsqu'elle se trouve à une étape prédéterminée de la chaîne de production,
- stabilisation forcée de la caisse du véhicule s'effectuant au moyen d'un dispositif de stabilisation comportant au moins un vérin destiné à déplacer un bras apte à venir contre une surface inférieure du véhicule afin de rompre la liaison entre les bras de l'ensemble de crochets arrière et la caisse du véhicule par décollement de celle-ci,
- détermination de la position de la caisse du véhicule,
- opération de fabrication correspondant à l'étanchéification,
- passage à une étape de fabrication suivante.

De préférence, la stabilisation forcée de la caisse du véhicule s'effectue au moyen d'un dispositif de stabilisation comportant au moins un vérin destiné à déplacer rapidement des bras en début de course, puis à ralentir le déplacement du bras avant qu'il ne vienne en contact avec une surface inférieure du véhicule, tandis que pour le passage à l'étape de fabrication suivante, il est procédé à un déplacement rapide des bras vers une position rétractée.

De préférence, l'action de détermination de la position du véhicule s'effectue au moyen de cameras.

Avantageusement, l'opération de fabrication correspondant à l'étanchéification consiste à appliquer un produit étanchéifiant sur des surfaces inférieures de la caisse du véhicule, au moyen d'un appareil robotique.

Avantageusement, l'action de stabilisation forcée de la caisse du véhicule s'effectue en moins de 5 secondes.

L'invention concerne également un dispositif de mise en oeuvre du procédé précédemment défini, le dispositif étant constitué :
- d'une balancelle comprenant des bras d'ensembles de crochet avant et arrière, et
- d'un dispositif de stabilisation comportant au moins un vérin destiné à déplacer un bras,
la caisse du véhicule demeurant suspendue à des bras d'un ensemble de crochet avant de la balancelle, le dispositif comprenant au moins un vérin agencé pour se déplacer un bras entre une position rétractée et une position étendue dans laquelle le bras du vérin vient en appui contre une surface prédéterminée de la caisse de véhicule afin de décoller la caisse du véhicule de bras d'un ensemble de crochet arrière de la balancelle.

De plus, le dispositif de l'invention peut comprend deux vérins, chaque vérin comprenant un moteur relié à une vis sans fin ainsi qu'un bras déplaçable verticalement par la mise en rotation de la vis sans fin, chaque bras étant apte à venir en appui contre une surface prédéterminée de la caisse du véhicule.

De préférence, le dispositif de l'invention se **caractérise en ce que** chaque bras est muni d'un patin d'appui destiné à venir en appui contre la surface inférieure d'un longeron de la caisse de véhicule.

D'autres caractéristiques et avantages de la présente invention vont maintenant être décrits de manière plus détaillée à l'aide des dessins annexés donnés à titre illustratif et non limitatif sur lesquels:
- la Figure 1 est une vue schématique générale d'un dispositif de stabilisation d'une caisse de véhicule selon l'invention ;
- la Figure 2 est une vue schématique en détail d'un élément de la figure 1; et
- la Figure 3 est une vue schématique en détail de l'élément de la figure 1 lorsque celui-ci se trouve en position d'appui contre une caisse de véhicule.

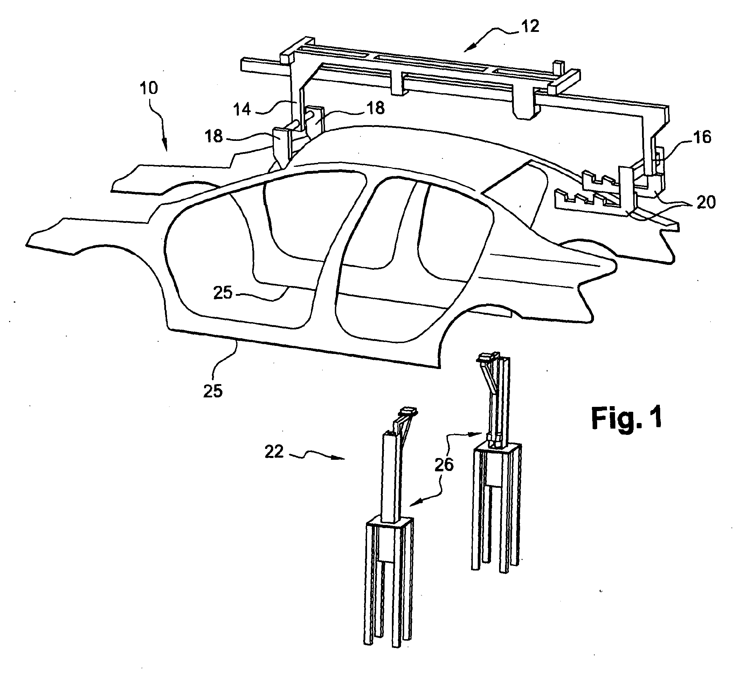

Sur la Figure 1 est représentée une caisse de véhicule 10 lorsqu'elle se trouve à une étape d'une chaîne de production. Cette étape peut comprendre, par exemple, une étape d'étanchéification lors de laquelle, avant de passer dans l'atelier de peinture, du produit étanchéifiant est appliqué sur les surfaces inférieures de la caisse du véhicule 10.

La caisse de véhicule 10 est suspendue à une balancelle 12 qui est agencée pour se déplacer le long de la chaîne de production, transportant la caisse d'une étape de production à l'étape suivante. La balancelle 12 comprend un ensemble de crochet avant 14 et un ensemble de crochet arrière 16. Chaque ensemble de crochet 14 et 16 comprend une paire de bras, 18 et 20 respectivement, qui prennent appui sur la surface inférieure du pavillon du véhicule afin de soutenir la caisse du véhicule 10.

La caisse de véhicule 10 est transportée par la balancelle 12 vers la zone d'étanchéification illustrée à la Figure 1. Puis, la balancelle est arrêtée afin qu'un appareil robotique (non représenté) puisse appliquer du produit étanchéifiant sur les surfaces inférieures de la caisse du véhicule 10. Lorsque la caisse du véhicule 10 se trouve à l'arrêt dans cette zone il est nécessaire de déterminer avec précision sa position afin que l'appareil robotique puisse être correctement orienté par rapport à la caisse. Cette opération se fait au moyen de cameras. Cependant, même quand la balancelle 12 est à l'arrêt, la caisse de véhicule 10 continue à se déplacer légèrement pendant un certain temps, que ce soit longitudinalement dans le sens de l'axe de déplacement de la balancelle 12, ou latéralement par rapport à cet axe. Ce mouvement est dû à l'inertie emmagasinée lors du déplacement de la balancelle 12, mais aussi du fait de l'élasticité importante de la caisse du véhicule 10. La durée du mouvement de la caisse de véhicule 10 peut atteindre 25 secondes, temps pendant lequel l'opération pour déterminer la position exacte de la caisse de véhicule 10 ne peut pas commencer.

Selon l'invention, afin de réduire la période pendant laquelle la caisse de véhicule 10 reste en mouvement après l'arrêt de la balancelle 12, la chaîne de production est équipée d'un dispositif de stabilisation de la caisse de véhicule 10.

Comme représenté sur la Figure 1, le dispositif de stabilisation 22 comprend au moins un vérin 24, deux dans l'exemple illustré, qui sont montés sur la chaîne de production, chacun situé en un point situé directement sous un des deux longerons 25 de la caisse de véhicule 10 lorsque celle-ci se trouve à l'arrêt dans la zone d'étanchéification. Une fois que la balancelle 12 s'arrête dans la zone d'étanchéification les deux vérins sont actionnés pour venir en appui contre la surface inférieure des longerons 25 comme il sera décrit plus en détail ci-après.

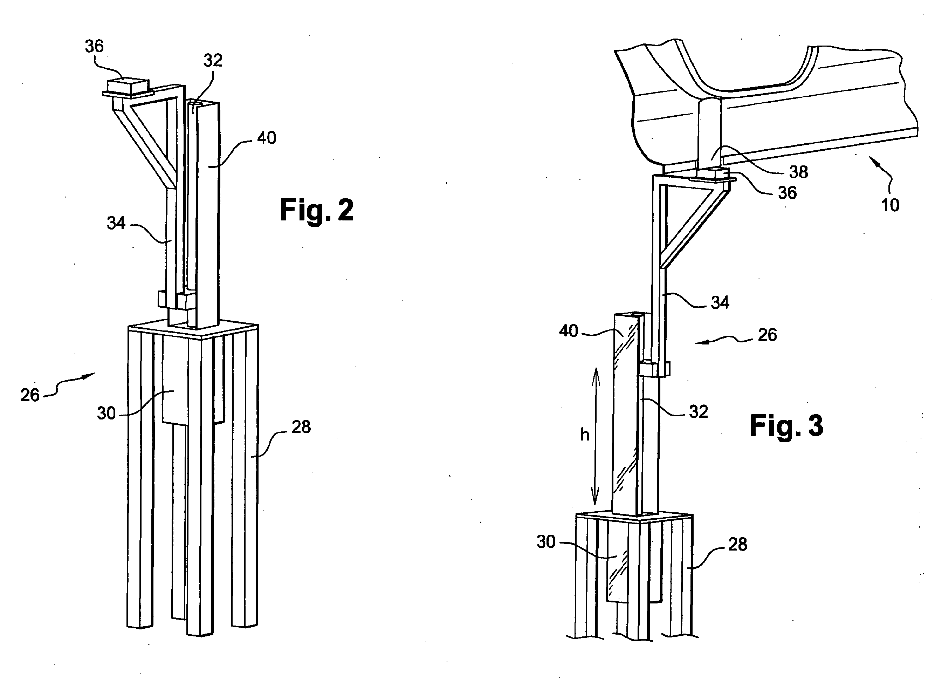

Les Figures 2 et 3 sont chacune des vues en détail d'un des vérins 26 de la Figure 1, la Figure 2 illustrant le vérin dans sa position rétractée tandis que la Figure 3 le montre dans sa position étendue. Comme représenté sur la Figure 2, chaque vérin 26 est monté sur un support 28 qui reçoit un moteur électrique 30 qui est relié à une vis sans fin 32. La rotation de la vis sans fin 32 provoque le déplacement vertical d'un bras 34 du vérin qui est muni à son extrémité supérieure d'un patin d'appui 36. Le patin d'appui 36, qui est en matériau plastique, par exemple en ertalon, est destiné, lorsque le bras se trouve dans sa position étendue illustrée sur la Figure 3, de venir en appui sur la surface inférieure du longeron 25 de la caisse de véhicule 10. De préférence, le patin d'appui vient en contact avec un appui cric 38 du véhicule formé sur le longeron 25, point le plus adapté à supporter le poids de la caisse.

Le bras 34 du vérin 26 remonte à travers une hauteur h le long d'un rail de guidage 40 pour atteindre une position dans laquelle la caisse du véhicule est décollée légèrement des bras 20 de l'ensemble de crochet arrière 16 de la balancelle 12. Le moteur électrique 30 est commandé de façon que le bras 34 se déplace rapidement en début de course, puis ralenti juste avant que le patin d'appui 36 ne vienne en contact avec l'appui cric 38. Le temps de déplacement du bras 34 est de l'ordre de 4 secondes. Ainsi, la caisse de véhicule est soulevée par deux vérins 26, disposés de part et d'autre de la caisse, chacun venant en appui sur un appui cric 38 associé. Une fois soulevée, la caisse de véhicule 10 s'immobilise complètement et l'opération de déterminer la position exacte de la caisse peut commencer.

Une fois que l'opération d'étanchéification est terminée, chaque moteur électrique est actionné pour faire descendre les bras 34 le plus rapidement possible vers leurs positions rétractées afin de permettre à la caisse de véhicule d'avancer vers l'étape de production suivante et pour ne pas gêner les autres opérations d'étanchéité.

L'utilisation du dispositif de stabilisation d'une caisse de véhicule selon l'invention réduit le temps de stabilisation de la caisse de 25 secondes à 4 secondes ce qui permet de diminuer d'autant le temps de réalisation de l'opération d'étanchéification.

## Revendications

1. Procédé de fabrication d'un véhicule (10) comprenant une étape de suspension du véhicule à une balancelle (12) au moyen de bras (18, 20) d'ensembles de crochet avant (14) et arrière (16), dans laquelle chaque bras (18, 20) vient prendre appui sur la surface inférieure du pavillon du véhicule,
la balancelle étant apte à se déplacer le long d'une chaîne de production où est opérée une succession d'étapes de réalisation des opérations de fabrication spécifiques, telle qu'une application d'un produit étanchéifiant,
pour lequel au moins l'une desdites étapes comprend la succession des actions suivantes :
- arrêt de la balancelle lorsqu'elle se trouve à une étape prédéterminée de la chaîne de production,
- stabilisation forcée de la caisse du véhicule s'effectuant au moyen d'un dispositif de stabilisation comportant au moins un vérin (26) destiné à déplacer un bras (34) apte à venir contre une surface inférieure du véhicule afin de rompre la liaison entre les bras (20) de l'ensemble de crochets arrière (16) et la caisse du véhicule par décollement de celle-ci,
- détermination de la position de la caisse du véhicule,
- opération de fabrication correspondant à l'étanchéification,
- passage à une étape de fabrication suivante.

2. Procédé selon la revendication 1, pour lequel au moins un vérin (26) est destiné à déplacer rapidement des bras (34) en début de course, puis à ralentir le déplacement du bras avant qu'il ne vienne en contact avec une surface inférieure du véhicule.

3. Procédé selon la revendication 1 ou 2, pour lequel la détermination de la position du véhicule s'effectue au moyen de cameras.

4. Procédé selon l'une quelconque des revendications 1 à 3, pour lequel l'opération de fabrication correspondant à l'étanchéification consiste à appliquer un produit étanchéifiant sur des surfaces inférieures de la caisse du véhicule, au moyen d'un appareil robotique.

5. Procédé selon l'une quelconque des revendications 2 à 4, pour lequel le passage à l'étape de fabrication suivante comprend un déplacement rapide des bras (34) vers une position rétractée.

6. Procédé selon l'une quelconque des revendications 1 à 5, pour lequel l'action de stabilisation forcée de la caisse du véhicule s'effectue en moins de 5 secondes.

7. Dispositif de mise en oeuvre du procédé de fabrication d'un véhicule selon l'une quelconque des revendications 1 à 6, le dispositif étant constitué :
- d'une balancelle (12) comprenant des bras (18, 20) d'ensembles de crochet avant (14) et arrière (16), et
- d'un dispositif de stabilisation comportant au moins un vérin (26) destiné à déplacer un bras (34), la caisse du véhicule demeurant suspendue à des bras (18) d'un ensemble de crochet avant (14) de la balancelle (12), le dispositif comprend au moins un vérin (26) agencé pour déplacer un bras (34) entre une position rétractée et une position étendue dans laquelle le bras du vérin vient en appui contre une surface prédéterminée (38) de la caisse de véhicule (10) afin de décoller la caisse du véhicule de bras (20) d'un ensemble de crochet arrière (16) de la balancelle (12).

8. Dispositif selon la revendication 7, **caractérisé en ce qu'**il comprend deux vérins (26), chaque vérin comprenant un moteur (30) relié à une vis sans fin (32) ainsi qu'un bras (34) déplaçable verticalement par la mise en rotation de la vis sans fin (32), chaque bras étant apte à venir en appui contre une surface prédéterminée (38) de la caisse du véhicule (10).

9. Dispositif selon la revendication 8, **caractérisé en ce que** chaque bras (34) est muni d'un patin d'appui destiné à venir en appui contre la surface inférieure d'un longeron (25) de la caisse de véhicule (10).

## Claims

1. Method of manufacturing a vehicle (10) comprising a stack of suspending the vehicle from a suspended tray (12) of a suspended-tray conveyor by means of arms (18, 20) of sets of front (14) and rear (16) hooks, in which each arm (18, 20) rests on the underside of the roof of the vehicle,
the suspended tray being able to move along a production line where a succession of steps for carrying out specific manufacturing operations are performed, these including the application of a sealant,
for which at least one of the steps involves the following series of actions:
- stopping the suspended tray when it is at a predetermined point on the production line,
- forcibly stabilizing the body of the vehicle by means of a stabilizing device comprising at least on actuating cylinder (26) intended to move an arm (34) able to come against an underside of the vehicle so as to break the connection between the arms (20) of the set of rear hooks (16) and the body of the vehicle by detaching the latter,
- determining the position of the body of the vehicle,
- performing the manufacturing operation that corresponds to sealing,
- moving on to the next stage of manufacture.

2. Method according to Claim 1, for which at least one actuating cylinder (26) is intended to move the arm (34) quickly at the start of their travel, then slow the movement of the arm before it comes into contact with an underside of the vehicle.

3. Method according to Claim 1 or 2, for which the position of the vehicle is determined using cameras.

4. Method according to any one of Claims 1 to 3 for which the manufacturing operation that corresponds to sealing consists in applying a sealant to undersides of the body shell of the vehicle, using robotic apparatus.

5. Method according to any one of Claims 2 to 4, for which moving on to the next stage of manufacture involves a rapid movement of the arm (34) into a retracted position.

6. Method according to any one of Claims 1 to 5, for which the action of possibly stabilizing the vehicle body shell is performed in under 5 seconds.

7. Device for implementing the method of manufacturing a vehicle according to any one of Claims 1 to 6, the device consisting:
- of a suspended tray (12) comprising arms (18, 20) sets of front (14) and rear (16) hooks, and
- of a stabilizing device comprising at least one actuating cylinder (26) intended to move an arm (34), the vehicle body shell remaining suspended from arms (18) of a front set of hooks (14) of the suspended tray (12), the device comprising at least one actuating cylinder (26) designed to move an arm (34) between a retracted position and a deployed position in which the arm of the actuator rests against a predetermined surface (38) of the vehicle body shell (10) so as to detach the vehicle body shell from arms (20) of a rear set of hooks (16) of the suspended tray (12).

8. Device according to Claim 7, **characterized in that** it comprises two actuating cylinder (26), each actuating cylinder comprising motor (30) connected to a worm (32) and an arm (34) that can be moved vertically by turning the worm (32), each arm being able to come to rest against the predetermined surface (38) of the vehicle body shell (10).

9. Device according to Claim 8, **characterized in that** each arm (34) is fitted with a bearing pad intended to bear against the underside of a side member (25) of the vehicle body shell (10).

## Patentansprüche

1. Verfahren zur Fertigung eines Fahrzeugs (10) mit einem Schritt des Aufhängens des Fahrzeugs an einem Traggestell (12) mittels Armen (18, 20) einer Vorderhaken-(14)- und Hinterhaken-(16)-Anordnung, wobei sich jeder Arm (18, 20) an der Innenseite des Fahrzeugsdachs abstützt,
wobei sich das Traggestell entlang einer Fertigungsstraße bewegen kann, an der eine Folge von Schritten zur Durchführung von bestimmten Fertigungsarbeitsgängen, wie zum Beispiel das Aufbringen eines Dichtungsmittels, erfolgt,
wobei mindestens einer dieser Schritte die Folge der folgenden Vorgänge umfasst:
- Anhalten des Traggestells, wenn es sich an einer vorbestimmten Station der Fertigungsstraße befindet,
- Zwangsstabilisierung der Karosserie des Fahrzeugs, die mittels einer Stabilisierungsvorrichtung erfolgt, die mindestens einen Zylinder (26) aufweist, der einen Arm (34) bewegen soll, der an einer Innenseite des Fahrzeugs kommen kann, um die Verbindung zwischen den Armen (20) der Vorderhaken-(14)- und Hinterhaken-(16)-Anordnung und der Karosserie des Fahrzeugs durch Abheben davon zu unterbrechen,
- Bestimmen der Position der Karosserie des Fahrzeugs,
- Fertigungsarbeitsgang, der der Abdichtung entspricht,
- Passieren zu einem nachfolgenden Fertigungsschritt.

2. Verfahren nach Anspruch 1, wobei mindestens ein Zylinder (26) die Arme (34) zu Beginn des Hubs schnell bewegen soll, dann die Bewegung des Arms verlangsamen soll, bevor er mit einer Innenseite des Fahrzeugs in Kontakt kommt.

3. Verfahren nach Anspruch 1 oder 2, wobei die Bestimmung der Position des Fahrzeugs mittels Kameras erfolgt.

4. Verfahren nach einem der Ansprüche 1 bis 3, wobei der Fertigungsarbeitsgang, der der Abdichtung entspricht, daraus besteht, mittels einer Robotervorrichtung ein Dichtungsmittel auf die Innenseiten der Karosserie des Fahrzeugs aufzubringen.

5. Verfahren nach einem der Ansprüche 2 bis 4, wobei das Passieren zu dem nachfolgenden Fertigungsschritt ein schnelles Bewegen der Arme (34) in eine zurückgezogene Position umfasst.

6. Verfahren nach einem der Ansprüche 1 bis 5, wobei der Vorgang der Zwangsstabilisierung der Karosserie des Fahrzeugs in weniger als 5 Sekunden erfolgt.

7. Vorrichtung zur Durchführung des Verfahrens zur Fertigung eines Fahrzeugs nach einem der Ansprüche 1 bis 6, wobei die Vorrichtung aus Folgendem besteht:
- einem Traggestell (12) mit Armen (18, 20) einer Vorderhaken-(14)- und Hinterhaken-(16)-Anordnung und
- einer Stabilisierungsvorrichtung, die mindestens einen Zylinder (26) aufweist, der einen Arm (34) bewegen soll, wobei die Karosserie des Fahrzeugs an den Armen (18) einer Vorderhaken-(14)-Anordnung des Traggestells (12) aufgehängt bleibt, wobei die Vorrichtung mindestens einen Zylinder (26) umfasst, der dazu angeordnet ist, einen Arm (34) zwischen einer zurückgezogenen Position und einer ausgezogenen Position zu bewegen, in der der Arm des Zylinders in Anlage an einer vorbestimmten Fläche (38) der Karosserie des Fahrzeugs (10) kommt, um die Karosserie des Fahrzeugs von dem Arm (20) einer Hinterhaken-(16)-Anordnung des Traggestells (12) abzuheben.

8. Vorrichtung nach Anspruch 7, **dadurch gekennzeichnet, dass** sie zwei Zylinder (26) umfasst, wobei jeder Zylinder eine Motor (30) der mit einer Schnecke (32) verbunden ist, sowie einen Arm (34) aufweist, der vertikal beweglich ist, indem die Schnecke (32) in Drehung versetzt wird, wobei jeder Arm an einer vorbestimmten Fläche (38) der Karosserie des Fahrzeugs (10) in Anlage kommen kann.

9. Vorrichtung nach Anspruch 8, **dadurch gekennzeichnet, dass** jeder Arm (34) mit einem Stützschuh versehen ist, der an einer Innenseite eines Längsträgers (25) der Karosserie des Fahrzeugs (10) in Anlage kommen soll.
